# EUROPÄISCHE PATENTSCHRIFT

(11) **EP 3 707 210 B1**
(45) Veröffentlichungstag und Bekanntmachung des Hinweises auf die Patenterteilung: **20.10.2021**
(21) Anmeldenummer: 18800148.1
(22) Anmeldetag: 08.11.2018
(51) Int. Cl.: C08L 69/00

(54) **GLASFASERGEFÜLLTE THERMOPLASTISCHE ZUSAMMENSETZUNG MIT GUTEN MECHANISCHEN EIGENSCHAFTEN**
GLASS FIBER FILLED THERMOPLASTIC COMPOSITION HAVING GOOD MECHANICAL PROPERTIES
COMPOSITION THERMOPLASTIQUE CHARGÉE DE FIBRES DE VERRE PRÉSENTANT DE BONNES PROPRIÉTÉS MÉCANIQUES

(30) Priorität: 10.11.2017 EP 17200960; 15.11.2017 LU 100515
(43) Veröffentlichungstag der Anmeldung: 16.09.2020
(73) Patentinhaber: Covestro Intellectual Property GmbH & Co. KG, 51373 Leverkusen (DE)
(72) Erfinder: WANDNER, Derk Erich, 51519 Odenthal (DE)
(74) Vertreter: Levpat
(86) Internationale Anmeldenummer: PCT/EP2018/080675
(87) Internationale Veröffentlichungsnummer: WO 2019/092141

(56) Entgegenhaltungen:
- US-A- 5 202 374
- US-A1- 2014 243 467
- US-A1- 2015 353 732

## Beschreibung

Die vorliegende Erfindung betrifft eine thermoplastische Zusammensetzung, insbesondere eine thermoplastische Polycarbonat-Zusammensetzung, zur Erzeugung einer thermoplastischen Formmasse, ein Verfahren zur Herstellung der thermoplastischen Formmasse, die Formmasse selbst, die Verwendung der Zusammensetzung oder Formmasse zur Herstellung von Formkörpern und die Formkörper selbst.

Polycarbonat-Zusammensetzungen sind seit langem bekannt und aus diesen Materialien werden für eine Vielzahl von Anwendungen Formkörper hergestellt, beispielsweise im Automobilbereich, für Schienenfahrzeuge, für den Bausektor, im Bereich Elektro/Elektronik und bei Haushaltsgeräten. Durch Variation der Menge und Art der Rezepturbestandteile lassen sich die Zusammensetzungen und damit auch die hergestellten Formkörper in weiten Bereichen hinsichtlich ihrer thermischen, rheologischen und mechanischen Eigenschaften an die Anforderungen der jeweiligen Anwendung anpassen.

Für manche Anwendungen, besonders bei dünnwandigen Bauteilen, ist die Steifigkeit von Formkörpern enthaltend Polycarbonat-Zusammensetzungen nicht ausreichend. Zur Erhöhung des Elastizitätsmoduls werden deshalb Verstärkungsstoffe wie Talk, Wollastonit oder Glasfasern zugemischt. Besonders Glasfasern eignen sich für eine erhebliche Erhöhung der Steifigkeit.

Die genannten Verstärkungsstoffe führen aber oftmals zu einer Verschlechterung der Zähigkeitseigenschaften, was wiederum durch die Zugabe von polymeren Blendpartnern mit niedrigen Glasübergangstemperaturen als elastische Komponente zumindest teilweise ausgeglichen werden kann.

Als solche Schlagzähmodifikatoren werden beispielsweise Pfropfpolymere mit einer Kern-Schale Struktur aus einem butadienhaltigen Kern und einer Pfropfhülle aus Vinyl(co)polymer eingesetzt, welche eine (Teil)Verträglichkeit des Modifikators mit dem Polycarbonat und eventuell in der Mischung enthaltenen weiteren Polymerkomponenten sicherstellen soll.

So beschreibt EP 0 315 868 A2 die Verwendung von Pfropfpolymerisaten hergestellt aus einem teilchenförmigen Dienkautschuk und einer Pfropfhülle aus Vinylmonomeren in Polycarbonat-Zusammensetzungen. Die Formmassen zeichnen sich durch eine gute Zähigkeit bei tiefen Temperaturen und eine gute Benzinbeständigkeit aus.

Es werden auch andere Arten von Elastomerkomponenten eingesetzt, die keine Kern-Schale Struktur aufweisen.

WO 2013/045544 A1 offenbart flammgeschützte PC/ABS Zusammensetzungen mit guter Schlagzähigkeit, Fließfähigkeit und Chemikalienbeständigkeit. Die Zusammensetzungen enthalten Polycarbonate, Pfropfpolymerisate und ein kautschukfreies alpha-Olefin-Terpolymer. Die Formmassen eignen sich insbesondere für dünnwandige Gehäuseteile im Elektro- und Elektronikbereich.

US 2015/0353732 A1 offenbart Zusammensetzungen enthaltend Polycarbonat und/oder Polyester, optional Schlagzähmodifikator und Flammschutzmittel sowie einen Verträglichkeitsvermittler mit einem mit Maleinsäureanhydrid funktionalisierten Polyolefin. Durch den Verträglichkeitsvermittler wird eine verbesserte Schlagzähigkeit erreicht.

WO 2013 / 045552 A1 offenbart eine thermoplastische Formmasse aus Polycarbonat und anorganischen Füllstoffen, die 0,01 bis 0,5 Gew.-Teile mindestens eines anhydrid-modifizierten alpha-Olefin-Terpolymers enthält und einen hohen Grad an Steifigkeit und eine gute Zähigkeit aufweist. Das eingesetzte anhydrid-modifizierte alpha-Olefin-Terpolymer weist ein Molekulargewicht M_{w} von 2000 g/mol bis 10000 g/mol auf.

US 2014/0329948 A1 offenbart schlagzähmodifizierte und glasfaserverstärkte Polycarbonat-Zusammensetzungen mit hoher Steifigkeit und guten thermischen und rheologischen Eigenschaften in Verbindung mit guter Flammwidrigkeit. Die Zusammensetzungen enthalten Polycarbonat, Flammschutzmittel, Glasfasern und ein anhydrid-modifiziertes alpha-Olefin-Terpolymer.

WO 2015/ 189761 offenbart thermisch leitfähige thermoplastische Zusammensetzungen enthaltend eine Polymermatrix, einen chemisch reaktiven Schlagzähmodifikator und einen thermisch leitfähigen Füllstoff. Als chemisch reaktiver Schlagzähmodifikator wird ein mit Maleinsäureanhydrid gepfropftes Ethylen-Copolymer offenbart. Die Zusammensetzungen zeichnen sich durch gute thermische Leitfähigkeit und Zähigkeit aus.

US 5,202,374 A beschreibt ternäre Mischungen, enthaltend Polycarbonate und/oder Polyestercarbonate, Glasfasern und C₂- bis C₈- Olefin-Acrylsäureester-Maleinsäureanhydrid-Terpolymere. Die Mischungen sollen sich durch eine gute Schlagzähigkeit und eine gute Bruchdehnung auszeichnen.

Die beschriebenen glasfaserverstärkten Zusammensetzungen und Formmassen aus dem Stand der Technik zeichnen sich aber durch eine noch unzureichende Zähigkeit aus, insbesondere hinsichtlich multi-axialer Belastung und Bruchdehnung im Zugversuch. Grundsätzlich könnte durch eine Erhöhung des Anteils der elastischen Komponente die Zähigkeit gesteigert werden, was in der Regel aber zu einer schlechteren Verarbeitbarkeit der Formmassen etwa im Spritzgussverfahren führt.

Es war daher wünschenswert, glasfaserverstärkte Zusammensetzungen bereitzustellen, die sich aufgrund einer guten Schmelzefließfähigkeit gut verarbeiten lassen und die gleichzeitig auch die Herstellung von Formkörpern mit einer guten Zähigkeit ermöglichen.

Insbesondere war es wünschenswert, glasfaserverstärkte Zusammensetzungen bereitzustellen, die sich durch eine hohe Maximalkraft im Durchstoßversuch, eine hohe Bruchdehnung, eine niedrige Schmelzeviskosität und einem hohen MVR Wert auszeichnen.

Es wurde nun überraschenderweise gefunden, dass eine Zusammensetzung zur Erzeugung einer thermoplastischen Formmasse, wobei die Zusammensetzung folgende Bestandteile enthält:
A) mindestens ein Polymer ausgewählt aus der Gruppe bestehend aus aromatischem Polycarbonat und aromatischem Polyestercarbonat,
B) mindestens ein mit einem Anhydrid funktionalisiertes Ethylen-α-Olefin-Copolymer oder Ethylen-α-Olefin Terpolymer mit einem gewichtsgemittelten Molekulargewicht Mw von 50000 bis 500000 g/mol, bevorzugt 100000 bis 400000 g/mol und besonders bevorzugt von 150000 bis 350000 g/mol, jeweils bestimmt durch Hochtemperatur- Gelpermeationschromatographie mit ortho-Dichlorbenzol als Lösungsmittel gegen Polystyrol Standards,
C) Glasfasern
   die vorteilhaften Eigenschaften zeigt.

Die Zusammensetzungen enthalten bevorzugt
40 bis 98,9 Gew.-%, weiter bevorzugt 50 bis 90 Gew.-%, besonders bevorzugt 60 bis 85 Gew.-% der Komponente A,
0,1 bis 10 Gew.-%, weiter bevorzugt 0,5 bis 9 Gew.-%, besonders bevorzugt 1 bis 8 Gew.-% der Komponente B,
1 bis 40 Gew.-%, bevorzugt 5 bis 35 Gew.-%, besonders bevorzugt 10 bis 25 Gew.-% der Komponente C und
0 bis 20 Gew.-%, weiter bevorzugt 0,1 bis 15 Gew.-%, besonders bevorzugt 0,2 bis 10 Gew.-% weitere polymere Bestandteile und/oder Polymeradditive als Komponente D.

In einer bevorzugten Ausführungsform bestehen die Zusammensetzungen zu mindestens 90 Gew.-% aus den Komponenten A bis D. Am meisten bevorzugt bestehen die Zusammensetzungen nur aus den Komponenten A bis D.

Es ist möglich, dass die Maleinsäureanhydrid-Gruppen der Komponente B mit der Komponente A und/oder mit anderen Komponenten der Zusammensetzung chemische Reaktionen eingehen.

Die Maleinsäureanhydrid-Gruppen können auch mit Feuchtigkeit oder anderen Verunreinigungen chemische Reaktionen eingehen.

Solche Reaktionen finden insbesondere in der Schmelze bei hohen Temperaturen, wie sie bei der Schmelzecompoundierung (z.B. in einen Extruder) und bei der Spritzgussverarbeitung herrschen, statt.

Dadurch wird der Anteil von Maleinsäureanhydrid-Gruppen reduziert. Im Rahmen der vorliegenden Patentanmeldung werden auch solche Formmassen als erfindungsgemäß verstanden, wie sie erhalten werden, wenn die Komponenten A, B, C und optional D physikalisch gemischt und einer Schmelzecompoundierung unterzogen werden.

### Komponente A

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben gewichtsgemittelte Molekulargewichte M_{w} bestimmt durch GPC (Gelpermeationschromatographie in Methylenchlorid mit Polycarbonat als Standard) von 15000 g/mol bis 50000 g/mol, vorzugsweise von 20000 g/mol bis 35000 g/mol, insbesondere von 23000 g/mol bis 33000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 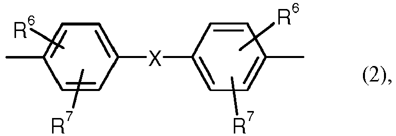 in der
R⁶ und R⁷ unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
X für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

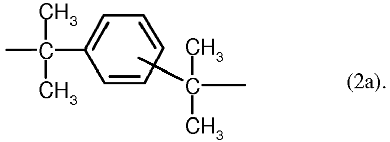

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methy1-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan (Bisphenol A), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Insbesondere bevorzugt ist 2,2-Bis-(4-hydroxyphenyl)-propan (Bisphenol-A).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl) -methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

In bevorzugter Ausführungsform wird als Komponente A nur aromatisches Polycarbonat eingesetzt, am meisten bevorzugt ein aromatisches Polycarbonat mit Bisphenol A als Diphenol-Einheit.

### Komponente B

Als Komponente B werden Ethylen -α-Olefin-Copolymere oder Terpolymere mit aufgepfropften Anhydridgruppen eingesetzt. Im Rahmen dieser Patentanmeldung wird die Komponente B auch als Ethylen -α-Olefin-Copolymer oder Terpolymer, das mit Anhydrid Gruppen funktionalisiert ist, bezeichnet.

Das Anhydrid ist vorzugsweise ausgewählt aus der Gruppe, die Maleinsäureanhydrid, Phthalsäureanhydrid, Furmarsäureanhydrid und Itaconsäureanhydrid sowie deren Mischungen umfasst. Besonders bevorzugt ist als Anhydrid Maleinsäureanhydrid.

Die Copolymere oder Terpolymere enthalten neben Ethylen als Comonomer (a-Olefin) vorzugsweise 1- Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen sowie deren Gemische.

Insbesondere wird ein Copolymer aus Ethylen und 1-Octen eingesetzt.

Die Herstellung der olefinischen Copolymere kann wie in US 5272236 A und US 5278272 A beschrieben erfolgen.

Die Pfropfung mit Anhydridgruppen ist beispielsweise in US 323691 A beschrieben.

Der α-Olefin Comonomergehalt beträgt bevorzugt 2 bis 40 Mol-%, weiter bevorzugt 5 bis 35 Mol- % und besonders bevorzugt 10 bis 25 Mol-%, jeweils bezogen auf die Summe von Ethylen und dem Comonomer oder den Comonomeren

Bei den beschriebenen Ethylen-α-Olefin-Copolymeren oder Terpolymeren handelt es sich bevorzugt um statistische Copolymere.

Die Copolymere oder Terpolymere mit aufgepfropften Anhydridgruppen können zur Optimierung der elastomeren Eigenschaften einer Anvernetzung wie in WO 98/02489 beschrieben unterzogen werden.

Die Anteile von Ethylen und der Comonomere können durch ¹H und ¹³C NMR Spektroskopie in Trichlorethan als Lösemittel bestimmt werden.

Das anhydridmodifizierte Polymer ist bevorzugt durch nachfolgende Zusammensetzung charakterisiert:
B(1) 90,0 bis 99,99 Gew.-% weiter bevorzugt 97,0 bis 99,9 Gew.-% besonders bevorzugt 99,0 bis 99,8 Gew-% Copolymer oder Terpolymer,
B(2) 0,01 bis 10,0 Gew-%, weiter bevorzugt 0,1 bis 3,0 Gew-% besonders bevorzugt 0,2 bis 1,0 Gew-% Anhydrid.

In bevorzugter Ausführungsform besteht die Hauptkette der Komponente B aus einem statistischen Copolymer aus Ethylen und 1-Octen Einheiten.

Das anhydridmodifizierte Copolymer oder Terpolymer hat ein gewichtsgemitteltes Molekulargewicht Mw von größer 50000 bis 500000 g/mol, bevorzugt 100000 bis 400000 g/mol und besonders bevorzugt von 150000 bis 350000 g/mol, jeweils bestimmt durch HT-GPC (Hochtemperatur- Gelpermeationschromatographie) mit ortho-Dichlorbenzol als Lösungsmittel gegen Polystyrol Standards.

Die Glasübergangstemperatur der bevorzugten Produkte beträgt maximal -50°C.

Die Glasübergangstemperatur wird mittels dynamischer Differenzkalorimetrie (DSC) gemäß der Norm DIN EN 61006 (Version von 2004) bei einer Heizrate von 10 K/min mit Definition der T_{g} als Mittelpunkttemperatur (Tangentenmethode) bestimmt.

### Komponente C

Die Zusammensetzung enthält als Komponente C Glasfasern.

Glasfasern können in den Ausführungsformen Endlosfasern (rovings), Langglasfasern und Schnittglasfasern verwendet werden. Bevorzugt werden Schnittglasfasern eingesetzt.

Die Glasfasern werden aus M-, E-, A-, S-, R- oder C-Glas herstellt, wobei E-, oder C-Glas weiter bevorzugt sind.

Der Durchmesser der Fasern beträgt bevorzugt 5 bis 25 µm, weiter bevorzugt 6 bis 20 µm, besonders bevorzugt 7 bis 17 µm.

Die Schnittglasfasern weisen vor Compoundierung bevorzugt eine Länge von 0,5 bis 10 mm, weiter bevorzugt von 1 bis 8 mm, am meisten bevorzugt von 3 mm bis 6 mm auf.

Die Glasfasern können unterschiedliche Querschnitte aufweisen. Bevorzugt sind runde, elliptische, ovale, oktagonale und flache Querschnitte, besonders bevorzugt sind runde und ovale Querschnitte.

In bevorzugter Ausführungsform weisen die Glasfasern eine Schlichte an der Oberfläche auf. Dabei werden beispielsweise Schlichten auf Basis von Epoxiden, Polyurethanen und Silanen sowie Mischungen dieser Schlichten verwendet.

Die verwendeten Glasfasern zeichnen sich dadurch aus, dass die Auswahl der Faser nicht durch die Wechselwirkungscharakteristik der Faser mit der Polycarbonatmatrix beschränkt ist.

### Komponente D

Die Zusammensetzung kann als Komponente D ein oder mehrere weitere Additive enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika, Leitfähigkeitsadditiven, Stabilisatoren (z.B. Hydrolyse-, Wärmealterungs- und UV-Stabilisatoren sowie Umesterungsinhibitoren und Säure-/Basenquenchern), Fließfähigkeitspromotoren, Verträglichkeitsvermittlern, weiteren polymeren Bestandteilen (beispielsweise Polyestern, Vinyl(co)polymeren oder funktionellen Blendpartnern), von Komponente C verschiedenen Füll- und Verstärkungsstoffen (beispielsweise Karbonfasern, Talk, Glimmer, Kaolin, CaCO₃) sowie Farbstoffen und Pigmenten (beispielsweise Titandioxid oder Eisenoxid).

In bevorzugter Ausführungsform ist die Zusammensetzung frei von Flammschutzmitteln, Antidrippingmitteln, Flammschutzsynergisten und Rauchinhibitoren.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren polymeren Bestandteilen, Farbstoffen und Pigmenten.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten, Schwefel-basierten Co-Stabilisatoren und organischen sowie anorganischen Brönstedt-Säuren.

In besonders bevorzugter Ausführungsform enthält die Zusammensetzung als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit.

In speziell bevorzugter Ausführungsform enthält die Zusammensetzung als Stabilisator eine Kombination aus Octadecyl 3-(3,5-di-tert-butyl-4-hydroxyphenyl)propionat und Tris(2,4-di-tert-butylphenyl)phosphit.

Besonders bevorzugte Zusammensetzungen enthalten als Entformungsmittel Pentaerythrittetrastearat, als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit sowie optional eine Brönstedt-Säure.

### Herstellung der Formmassen und Formkörper

Aus den erfindungsgemäßen Zusammensetzungen können thermoplastische Formmassen hergestellt werden.

Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 300°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet

Dabei wird zumindest die Komponente A aufgeschmolzen, alle Bestandteile der Zusammensetzung ineinander dispergiert und/oder gelöst und in einem weiteren Schritt die erhaltene Schmelze durch Abkühlen wieder verfestigt und optional granuliert. Es ist möglich, die Schritte der Verfestigung und Granulierung in beliebiger Reihenfolge zueinander durchzuführen.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Insbesondere kann es vorteilhaft sein, die Glasfasern über einen Seitenextruder zu dosieren.

Gegenstand der Erfindung ist auch ein Verfahren zur Herstellung der erfindungsgemäßen Formmassen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Es ist auch möglich, die Bestandteile der Zusammensetzungen direkt in eine Spritzgussmaschine oder in ein Extrusionsaggregat zu dosieren und zu Formkörper zu verarbeiten.

Beispiele für solche Formkörper, die aus den erfindungsgemäßen Zusammensetzungen und Formmassen hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

### Beispiele

### Eingesetzte Komponenten

### Komponente A:

A1: Lineares Polycarbonat auf Basis Bisphenol-A mit einem gewichtsgemittelten Molekulargewicht Mw von 28000 g/mol bestimmt durch Gelpermeationschromatographie in Methylenchlorid mit Polycarbonat als Standard.

### Komponente B:

B1: Maleinsäureanhydrid (MAH) funktionalisiertes Ethylen 1-Octen Copolymer mit einem MAH Gehalt von 0,8 Gew.-% und einem Verhältnis von Ethylen zu 1-Octen von 87 zu 13 Mol.-% sowie einem gewichtsgemittelten Molekulargewicht Mw von 200000 g/mol (Paraloid™ EXL 3808 D, Hersteller Dow Chemical).

B2: Maleinsäureanhydrid (MAH) funktionalisiertes Ethylen 1-Octen Copolymer mit einem MAH Gehalt von 0,4 Gew.-% und einem Verhältnis von Ethylen zu 1-Octen von 83 zu 17 Mol.-% sowie einem gewichtsgemittelten Molekulargewicht Mw von 322000 g/mol, Paraloid™ EXL 3815 (Hersteller Dow Chemical).

B3 (Vergleich): Kane ACE™ M732, Schlagzähmodifikator mit Kern-Schale Struktur und einem Butadienkautschuk als Kern (Hersteller Kaneka).

B4 (Vergleich): Metablen™ S2001, Schlagzähmodifikator mit Kern-Schale Struktur und einem Silikon-Acrylat Kompositkautschuk als Kern (Hersteller Mitsubishi Rayon).

B5 (Vergleich): Paraloid™ EXL 2300, Schlagzähmodifikator mit Kern-Schale Struktur und einem Acrylatkautschuk als Kern (Hersteller Dow Chemical).

B6 (Vergleich): Ethylen-Methyl Acrylat Copolymer mit einem Methyl Acrylat Anteil von 20 Gew.-% und einer Schmelzeflussrate von 8g/10 min bestimmt bei 190 °C und 2.16 kg, sowie einem gewichtsgemittelten Molekulargewicht M_{w} von 177.000 g/mol, Elvaloy™ AC 1820 (Hersteller DuPont).

B7 (Vergleich): Ethylen-Propylen-Octen-Maleinsäureanhydrid-Copolymer mit einem Verhältnis Ethylen : Propylen : Octen 87:6:7 in Gew.-% (entspricht 94:4:2 in Mol.-%), CAS-Nr. 31069-12-2, mit einem Molekulargewicht Mw 5000 g/mol bestimmt durch GPC mit Polystyrol als Standard und einem Maleinsäureanhydridanteil 4,4% Gew.-% , HiWax™ 1105 A (Hersteller Mitsui Chemicals).

### Komponente C

C1: CS 7968, geschnittene Kurzglasfasern mit einer Schlichte aus einem Epoxyharz auf Basis Bisphenol A der Firma Lanxess AG mit einem durchschnittlichen Faserdurchmesser von 11 µm und einer durchschnittlichen Faserlänge von 4,5 mm.

C2: CS 7942, geschnittene Kurzglasfasern mit einer Polyurethanschlichte der Firma Lanxess AG mit einem durchschnittlichen Faserdurchmesser von 14 µm und einer durchschnittlichen Faserlänge von 4,5 mm.

### Komponente D:

Dl: : Thermostabilisator, Irganox™ B900 (Gemisch aus 80% Irgafos™ 168 (Tris(2,4-di-tert-butylphenyl)-phosphit) und 20% Irganox™ 1076 (2,6-Di-tert-butyl-4-(octadecanoxycarbonylethyl)-phenol); BASF (Ludwigshafen, Deutschland).

D2: Entformungsmittel Pentaerythrittetrastearat

### Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 300°C. Die Formkörper wurden bei einer Massetemperatur von 300°C und einer Werkzeugtemperatur von 80°C auf einer Spritzgießmaschine Typ Arburg 270 E hergestellt.

Der MVR wird bestimmt gemäß ISO 1133 (Version von 2012) bei 300°C unter Verwendung einer Stempellast von 1,2 kg und einer Aufschmelzzeit von 5 Minuten.

Die Schmelzeviskositäten wurden gemäß ISO 11443 (Version von 2014) bei 280 °C bei einer Scherrate von 1000 S⁻¹ ermittelt.

Die Bruchdehnung und die nominelle Bruchdehnung wurden gemäß ISO 527 (Version von 1996) bei Raumtemperatur bestimmt.

Als weiteres Maß für die Duktilität im praxisrelevanten Schlag-/Crashversuch diente das Verhalten im multiaxialen Durchstoßversuch. Der Durchstoßversuch wurde bei 23 °C in Anlehnung an ISO 6603-2 (Version von 2000, in Anlehnung bedeutet, dass keine Sichtkontrolle der Probekörper durchgeführt wurde) an Prüfkörpern der Abmessung 60 mm x 60 mm x 2 mm durchgeführt.

**Tabelle 1: Zusammensetzungen und ihre Eigenschaften**

| Komponente (Gew.-%) | | 1 | 2 | V3 | V4 | V5 | V6 | V7 | V8 | 9 | V10 |
|---|---|---|---|---|---|---|---|---|---|---|---|
| A1 | | 74,35 | 74,35 | 74,35 | 74,35 | 74,35 | 74,35 | 74,35 | 74,35 | 74,35 | 74,35 |
| B1 | | 5,00 | | | | | | | | 5,00 | |
| B2 | | | 5,00 | | | | | | | | |
| B3 | | | | 5,00 | | | | | 5,00 | | |
| B4 | | | | | 5,00 | | | | | | |
| B5 | | | | | | 5,00 | | | | | |
| B6 | | | | | | | 5,00 | | | | |
| B7 | | | | | | | | 5,00 | | | 5,00 |
| C1 | | 20,00 | 20,00 | 20,00 | 20,00 | 20,00 | 20,00 | 20,00 | | | |
| C2 | | | | | | | | | 20,00 | 20,00 | 20,00 |
| D1 | | 0,25 | 0,25 | 0,25 | 0,25 | 0,25 | 0,25 | 0,25 | 0,25 | 0,25 | 0,25 |
| D2 | | 0,40 | 0,40 | 0,40 | 0,40 | 0,40 | 0,40 | 0,40 | 0,40 | 0,40 | 0,40 |

| Eigenschaften | Einheit | | | | | | | | | | |
|---|---|---|---|---|---|---|---|---|---|---|---|
| | | | | | | | | | | | |
| Durchstoß (23°C) | | | | | | | | | | | |
| Maximalkraft | N | 2018 | 2007 | 1415 | 974 | 1094 | 1103 | 959 | 886 | 1881 | 978 |
| Zugversuch (23°C) | | | | | | | | | | | |
| Bruchdehnung | % | 12,4 | 14,5 | 3,1 | 2,8 | 3,0 | 3,4 | 3,3 | 2,6 | 12,6 | 4,6 |
| Nominelle Bruchdehnung | % | 7,3 | 8,3 | 3,3 | 3,1 | 3,5 | 3,4 | 3,0 | 2,8 | 7,4 | 3,9 |
| | | | | | | | | | | | |
| Schmelzeviskosität (280°C) | Pa·s bei 1000 s⁻¹ | 362 | 357 | 532 | | | 364 | | 505 | 334 | |
| MVR (1,2kg - 5min, 300°C) | cm3/[10min] | 3,9 | 3,6 | 3,4 | 3,1 | 3,7 | 4,5 | 2,8 | 3,8 | 4,0 | 4,4 |

Die Daten aus Tabelle 1 zeigen, dass sich aus den erfindungsgemäßen Zusammensetzungen 1, 2 und 9 enthaltend die Komponenten B1 und B2 Formmassen mit guter Schmelzefließfähigkeit (hoher MVR Wert und niedrige Schmelzeviskosität) und Formkörper mit guter Zähigkeit im Durchstoßversuch und im Zugversuch erzeugen lassen. Werden anstatt der erfindungsgemäßen Komponente B1 bzw. B2 Pfropfpolymerisate mit Kern-Schale Struktur eingesetzt (B3, B4 und B5), so ist die Schmelzeviskosität hoch und gleichzeitig sind die Zähigkeitseigenschaften nicht gut.

Bei Verwendung der elastischen Komponenten B6 und B7 sind die Zähigkeitseigenschaften Maximalkraft im Durchstoßversuch, Bruchdehnung und nominelle Bruchdehnung ebenfalls nicht auf dem gewünschten Niveau.

Der Vorteil der Verwendung der erfindungsgemäßen mit einem Anhydrid funktionalisierten Ethylen-α-Olefin-Copolymer oder Ethylen-α-Olefin Terpolymere zeigt sich unabhängig von der eingesetzten Glasfaser.

## Patentansprüche

1. Zusammensetzung zur Erzeugung einer thermoplastischen Formmasse, wobei die Zusammensetzung die folgenden Bestandteile enthält oder hieraus besteht:
A) mindestens ein Polymer ausgewählt aus der Gruppe bestehend aus aromatischem Polycarbonat, und aromatischem Polyestercarbonat,
B) mindestens ein mit einem Anhydrid funktionalisiertes Ethylen-α-Olefin-Copolymer oder Ethylen-α-Olefin Terpolymer mit einem gewichtsgemittelten Molekulargewicht Mw von 50000 bis 500000 g/mol bestimmt durch Hochtemperatur- Gelpermeationschromatographie mit ortho-Dichlorbenzol als Lösungsmittel gegen Polystyrol Standards,
C) Glasfasern.

2. Zusammensetzung gemäß Anspruch 1, wobei die Komponente B 2 bis 40 Mol-% α-Olefin - Einheiten und 60 bis 98 Mol-% Ethylen-Einheiten, bezogen auf die Summe von α-Olefin und Ethylen, aufweist.

3. Zusammensetzung gemäß einem der vorherigen Ansprüche, wobei die Komponente B einen Gehalt an Anhydrid von 0,1 bis 3,0 Gew.-% aufweist.

4. Zusammensetzung gemäß einem der vorherigen Ansprüche, wobei die Komponente B ein mit Maleinsäureanhydrid funktionalisiertes Copolymer aus Ethylen und 1-Octen ist.

5. Zusammensetzung gemäß einem der vorherigen Ansprüche, wobei die Komponente B ein gewichtsgemitteltes Molekulargewicht Mw von 100000 bis 400000 g/mol aufweist.

6. Zusammensetzung gemäß einem der vorherigen Ansprüche, wobei die Komponente B 10 bis 25 Mol-% 1-Octen-Einheiten und 75 bis 90 Mol-% Ethylen-Einheiten bezogen auf die Summe von 1-Octen und Ethylen aufweist.

7. Zusammensetzung gemäß einem der vorherigen Ansprüche, wobei die Komponente A nur aus aromatischem Polycarbonat besteht.

8. Zusammensetzung gemäß einem der vorherigen Ansprüche, wobei die Komponente C eine Schnittglasfaserglasfaser mit mindestens einer Schlichte ausgewählt aus der Gruppe bestehend aus Epoxidschlichte, Polyurethanschlichte und Siloxanschlichte ist.

9. Zusammensetzung gemäß einem der vorherigen Ansprüche, wobei die Komponente C einen Durchmesser von 5µm bis 25 µm aufweist.

10. Zusammensetzung gemäß einem der vorherigen Ansprüche, enthaltend oder bestehend aus
40 bis 98,9 Gew.-% der Komponente A,
0,1 bis 10 Gew.-% der Komponente B,
1 bis 40 Gew.-% der Komponente C,
0 bis 20 Gew.-% weitere polymere Bestandteile und/oder Polymeradditive als Komponente D.

11. Zusammensetzung gemäß einem der vorherigen Ansprüche, wobei die Komponente D mindestens einen Stabilisator ausgewählt aus der Gruppe der phenolischen Antioxidantien und Phosphite umfasst.

12. Verfahren zur Herstellung von Formmassen, enthaltend die Schritte (i), (ii) und optional (iii), wobei in einem ersten Schritt (i)
Eine Zusammensetzung gemäß einem der Ansprüche 1 bis 11
durch Zuführung thermischer und/oder mechanischer Energie aufgeheizt, mindestens die Komponente A) dadurch aufgeschmolzen und alle eingesetzten Komponenten ineinander dispergiert und /oder gelöst werden,
und
in einem weiteren Schritt (ii)
die aus Verfahrensschritt (i) resultierende Schmelze (ii) durch Abkühlen wieder verfestigt und (iii) optional granuliert wird,
wobei die Verfahrensschritte (ii) und (iii) in beliebiger Reihenfolge zueinander durchgeführt werden können.

13. Formmasse, erhalten oder erhältlich nach einem Verfahren nach Anspruch 12.

14. Verwendung einer Zusammensetzung nach einem der Ansprüche 1 bis 11 oder einer Formmasse nach Anspruch 13 zur Herstellung von Formkörpern.

15. Formkörper, erhältlich aus einer Zusammensetzung nach einem der Ansprüche 1 bis 11 oder aus einer Formmasse nach Anspruch 13.

## Claims

1. Composition for producing a thermoplastic moulding material, wherein the composition contains or consists of the following constituents:
A) at least one polymer selected from the group consisting of aromatic polycarbonate, and aromatic polyestercarbonate,
B) at least one anhydride-functionalized ethylene-α-olefin copolymer or ethylene-α-olefin terpolymer having a weight-average molecular weight Mw of 50000 to 500000 g/mol determined by high-temperature gel permeation chromatography using ortho-dichlorobenzene as solvent against polystyrene standards,
C) glass fibres.

2. Composition according to Claim 1, wherein the component B comprises 2 to 40 mol% of α-olefin units and 60 to 98 mol% of ethylene units based on the sum of α-olefin and ethylene.

3. Composition according to either of the preceding claims, wherein the component B has a content of anhydride of 0.1% to 3.0% by weight.

4. Composition according to any of the preceding claims, wherein the component B is a maleic anhydride-functionalized copolymer of ethylene and 1-octene.

5. Composition according to any of the preceding claims, wherein the component B has a weight-average molecular weight Mw of 100000 to 400000 g/mol.

6. Composition according to any of the preceding claims, wherein the component B comprises 10 to 25 mol% of 1-octene units and 75 to 90 mol% of ethylene units based on the sum of 1-octene and ethylene.

7. Composition according to any of the preceding claims, wherein the component A consists solely of aromatic polycarbonate.

8. Composition according to any of the preceding claims, wherein the component C is a cut glass fibre glass fibre having at least one size selected from the group consisting of epoxide size, polyurethane size and siloxane size.

9. Composition according to any of the preceding claims, wherein the component C has a diameter of 5 µm to 25 µm.

10. Composition according to any of the preceding claims, containing or consisting of
40% to 98.9% by weight of the component A,
0.1% to 10% by weight of the component B,
1% to 40% by weight of the component C,
0% to 20% by weight of further polymeric constituents and/or polymer additives as component D.

11. Composition according to any of the preceding claims, wherein the component D comprises at least one stabilizer selected from the group of the phenolic antioxidants and phosphites.

12. Process for producing moulding materials, containing the steps (i), (ii) and optionally (iii), wherein in a first step (i)
a composition according to any of Claims 1 to 11 is heated by introduction of thermal and/or mechanical energy, at least the component A) is thus melted and all employed components are dispersed and/or dissolved in one another,
and
in a further step (ii)
the melt resulting from process step (i) is (ii) resolidified by cooling
and (iii) optionally pelletized,
wherein the process steps (ii) and (iii) may be performed in any desired sequence relative to one another.

13. Moulding material obtained or obtainable by a process according to Claim 12.

14. Use of a composition according to any of Claims 1 to 11 or of a moulding material according to Claim 13 for producing moulded articles.

15. Moulded article obtainable from a composition according to any of Claims 1 to 11 or from a moulding material according to Claim 13.

## Revendications

1. Composition pour la génération d'un matériau de moulage thermoplastique, la composition contenant les constituants suivants ou en étant constituée :
A) au moins un polymère choisi dans le groupe constitué par un polycarbonate aromatique et un polyester-carbonate aromatique,
B) au moins un copolymère d'éthylène―α-oléfine ou un terpolymère d'éthylène―α-oléfine fonctionnalisé avec un anhydride ayant un poids moléculaire moyenné en poids Mw de 50 000 à 500 000 g/mol déterminé par chromatographie par perméation sur gel à haute température avec de l'ortho-dichlorobenzène en tant que solvant contre un étalon polystyrène,
C) des fibres de verre.

2. Composition selon la revendication 1, dans laquelle le composant B comprend 2 à 40 % en moles d'unités α― oléfine et 60 à 98 % en moles d'unités éthylène, par rapport à la somme de l'α-oléfine et de l'éthylène.

3. Composition selon l'une quelconque des revendications précédentes, dans laquelle le composant B présente une teneur en anhydride de 0,1 à 3,0 % en poids.

4. Composition selon l'une quelconque des revendications précédentes, dans laquelle le composant B est un copolymère d'éthylène et de 1-octène fonctionnalisé avec de l'anhydride de l'acide maléique.

5. Composition selon l'une quelconque des revendications précédentes, dans laquelle le composant B présente un poids moléculaire moyenné en poids Mw de 100 000 à 400 000 g/mol.

6. Composition selon l'une quelconque des revendications précédentes, dans laquelle le composant B comprend 10 à 25 % en moles d'unités 1-octène et 75 à 90 % en moles d'unités éthylène par rapport à la somme du 1-octène et de l'éthylène.

7. Composition selon l'une quelconque des revendications précédentes, dans laquelle le composant A n'est constitué que de polycarbonate aromatique.

8. Composition selon l'une quelconque des revendications précédentes, dans laquelle le composant C est une fibre de verre coupée munie d'au moins un encollage choisi dans le groupe constitué par un encollage d'époxyde, un encollage de polyuréthane et un encollage de siloxane.

9. Composition selon l'une quelconque des revendications précédentes, dans laquelle le composant C présente un diamètre de 5 µm à 25 µm.

10. Composition selon l'une quelconque des revendications précédentes, contenant ou constituée par :
40 à 98,9 % en poids du composant A,
0,1 à 10 % en poids du composant B,
1 à 40 % en poids du composant C,
0 à 20 % en poids d'autres constituants polymères et/ou additifs polymères en tant que composant D.

11. Composition selon l'une quelconque des revendications précédentes, dans laquelle le composant D comporte au moins un stabilisateur choisi dans le groupe des antioxydants phénoliques et des phosphites.

12. Procédé de fabrication de matériaux de moulage, contenant les étapes (i), (ii) et optionnellement (iii), dans lequel, dans une première étape (i),
une composition selon l'une quelconque des revendications 1 à 11
est chauffée par apport d'énergie thermique et/ou mécanique, au moins le composant A) est ainsi fondu et tous les composants utilisés sont dispersés et/ou dissous les uns dans les autres,
et
dans une étape supplémentaire (ii),
la masse fondue (ii) résultant de l'étape de procédé (i) est de nouveau solidifiée par refroidissement et (iii) optionnellement granulée,
les étapes de procédé (ii) et (iii) pouvant être réalisée dans un ordre quelconque l'une par rapport à l'autre.

13. Matériau de moulage, obtenu ou pouvant être obtenu par un procédé selon la revendication 12.

14. Utilisation d'une composition selon l'une quelconque des revendications 1 à 11 ou d'un matériau de moulage selon la revendication 13 pour la fabrication de corps moulés.

15. Corps moulé, pouvant être obtenu à partir d'une composition selon l'une quelconque des revendications 1 à 11 ou à partir d'un matériau de moulage selon la revendication 13.
